# EUROPÄISCHE PATENTSCHRIFT

(11) **EP 0 480 957 B1**
(45) Veröffentlichungstag und Bekanntmachung des Hinweises auf die Patenterteilung: **25.08.1993**
(21) Anmeldenummer: 90909728.9
(22) Anmeldetag: 25.06.1990
(51) Int. Cl.: F16B 7/06, F16B 7/18

(54) **STABANKERANORDNUNG**
ROD ANCHORING DEVICE
AGENCEMENT D'ANCRAGE DE BARRES

(30) Priorität: 05.07.1989 DE 3922070
(43) Veröffentlichungstag der Anmeldung: 22.04.1992
(73) Patentinhaber: DANZ, Robert, D-71101 Schönaich (DE)
(72) Erfinder: DANZ, Robert, D-71101 Schönaich (DE)
(74) Vertreter: Böhmer, Hans Erich, Dipl.-Ing.
(86) Internationale Anmeldenummer: EP9001132
(87) Internationale Veröffentlichungsnummer: WO9100433

(56) Entgegenhaltungen:
- DE-A- 3 220 743
- DE-U- 8 707 293

## Beschreibung

Die Erfindung betrifft eine Stabankeranordnung für auf Zug beanspruchte Stäbe und Augenstäbe, bei welcher der Stabanker aus einem Stabankerkörper mit einer Bohrung mit Innengewinde zum Einschrauben eines mit Außengewinde versehenen Zugstabes sowie aus zwei zueinander parallelen, sich an den Ankerkörper anschließenden Augenlaschen zur Aufnahme eines Augenstabes besteht.

Derartige Stabankeranordnungen sind seit langem bekannt.

Bei diesen Anordnungen besteht das Problem, daß immer sichergestellt sein muß, daß der Zugstab in das Innengewinde des Stabankers in jedem Fall bis zur Mindesteindrehlänge eingeschraubt ist.

Dies hat man mit einer Konstruktion zu lösen versucht, bei der in dem Stabankerkörper eine senkrecht zur Längsachse angeordnete Kontrollbohrung vorgesehen wurde, durch die man die vorschriftsmäßige Mindesteindrehlänge des Zugstabes in das Innengewinde des Zugankers feststellen kann. Diese Anordnung zeigt die DE-U 87 07 293.

Obgleich diese Lösung vom Anmelder und Erfinder bereits mit Erfolg bei Hochbauten (Fachhochschule Bieberach) eingesetzt werden konnte, erschien diese Lösung doch nicht voll befriedigend zu sein. Die Kontrollbohrung ergibt immer eine unerwünschte Schwächung des Querschnittes, selbst dann, wenn man die Randzonen der Kontrollbohrung durch einen Wulst verstärkt.

Außerdem sieht eine solche Kontrollbohrung auf einer wulstartigen Verstärkung auch nicht gut aus. Zudem waren bei dieser Kontrollbohrung keine Toleranzbereiche feststellbar.

Die der Erfindung zugrundeliegende Aufgabe bestand darin, eine Stabankeranordnung der eingangs genannten Art zu schaffen, bei der in jedem Falle sichergestellt ist, daß die erforderliche Mindesteindrehlänge auf jeden Fall eingehalten werden kann. Außerdem soll die Mindesteindrehlänge auch mit einer positiven oder einer negativen Toleranz in jedem Fall sichergestellt werden können.

Dies wird erfindungsgemäß durch die Merkmale des Patentanspruchs 1 erreicht.

Weitere Merkmale der Erfindung sind den Unteransprüchen zu entnehmen.

Die Erfindung wird nunmehr anhand eines Ausführungsbeispieles in Verbindung mit der beigefügten Zeichnung näher erläutert.

In der Zeichnung zeigt
- Fig. 1a: schematisch eine Draufsicht auf den Stabanker mit Zugstab gemäß der Erfindung;
- Fig. 1b: schematisch eine Draufsicht auf einen Abschnitt des Zugstabes
und
- Fig. 2: eine Querschnittsanischt der Stabankeranordnung gemäß der Erfindung.

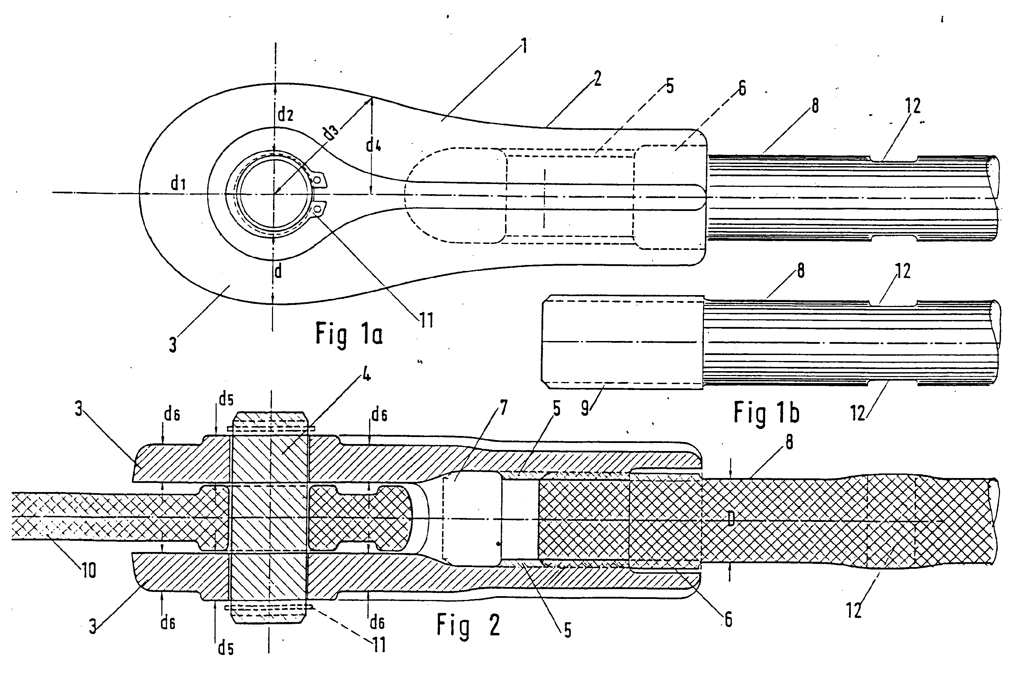

Fig. 1a zeigt einen Stabanker 1 mit einem Ankerkörper 2, an den sich zwei Augenlaschen 3 anschließen, in die ein in Fig. 2 gezeigter Augenbolzen 4 einsetzbar ist. Der Stabanker 2 weist eine Bohrung auf, in der ein Innengewinde 5 vorgesehen ist. Über die Abmessungen dieses Innengewindes wird noch zu sprechen sein.

Am äußeren Ende der Bohrung ist ein glatter Toleranzausgleichsabschnitt 6 vorgesehen. Vorzugsweise ist auf der anderen Seite des Innengewindes, wie in Fig. 2 erkennbar, ein weiterer Toleranzausgleichsabschnitt 7 vorgesehen.

In das Innengewinde 5 der Bohrung des Stabankers 2 ist ein Zugstab 8 mittels eines Außengewindes 9 einschraubbar. In diesem Zusammenhang sei bemerkt, daß diese Zugstäbe Spannschloßcharakter aufweisen, d.h. daß jeweils an einem Ende ein Rechtsgewinde und am anderen, nicht dargestellten Ende, ein Linksgewinde vorgesehen sind. Desgleichen gibt es dann Stabanker mit Rechts- bzw. Links-Innengewinde. Wie aus Fig. 2 erkennbar, ist zwischen die beiden Augenlaschen 3 ein Augenstab 10 einsetzbar, der dann durch den Augenbolzen 4 gehalten wird. Dieser wird wiederum durch einen Seegerring 11 am Herausgleiten gehindert.

Die Abmessungen der einzelnen Gewinde sind dabei von besonderer Bedeutung.

Schließlich zeigt Fig. 1a und 1b noch eine Vertiefung 12, die vorzugsweise auf zwei gegenüberliegenden Seiten des Zugstabes angebracht wird, wodurch das Eindrehen des Zugstabes in den Stabanker erleichtert wird.

Die Abmessungen der einzelnen Gewinde und der Toleranzausgleichsabschnitte sind dabei so gewählt, daß dann, wenn der Zugstab so weit eingedreht ist, daß das Gewinde nicht mehr zu sehen ist, die Mindesteindrehlänge des Außengewindes 9 in das Innengewinde 5 des Stabankers 2 mindestens erreicht ist. Mit anderen Worten: die Länge des Außengewindes 9 des Zugstabes 8 und auch die Länge des Innengewindes 5 des Stabankers 2 entspricht im wesentlichen der Mindesteindrehlänge zuzüglich der Länge eines Toleranzausgleichsabschnittes 6. Man kann also unter Berücksichtigung dieser Gewindelängen einen gewissen Toleranzausgleich erzielen, ohne daß dabei die Mindesteindrehlänge unterschritten wird. Zudem ist es auch ästhetischer, wenn kein offen daliegendes Gewinde zu sehen ist.

Auch die übrigen Abmessungen der neuen Stabankeranordnung sind von ganz wesentlicher Bedeutung. Nimmt man den Querschnitt des Zugstabes 8 mit seinem Durchmesser D als Einheitsmaß, dann weisen die Augenlaschen folgende Abmessungen auf: Die Materialstärke d1 der Augenlaschen in Richtung der Zugbeanspruchung entspricht etwa dem Durchmesser D des Zugstabes. Die Materialstärke der Augenlaschen in einer dazu senkrechten,durch den Mittelpunkt des Augenbolzens gehenden Richtung, d2 entspricht etwa dem 0,74-fachen des Durchmessers des Zug -stabes. Die Breite d3 am Übergang von den Augenlaschen 3 in den Ankerkörper, gemessen unter einem Winkel von 45° gegen die Längsachse entspricht etwa dem 1,04-fachen des Durchmessers des Zugstabes. Die gleichen Abmess ungen finden sich als Maß d4 vom Endpunkt des Maßes d3 senkrecht zur Längsachse.

Die Querschnittsabmessungen der Augenlaschen 3 in der Umgebung des Augenbolzens 4 sind d5 und entsprechen damit etwa dem 0,5-fachen des Durchmessers D des Zugstabes. Diese Abmessungen verringern sich auf d6 zu beiden Seiten des Augenbolzens auf das jeweils etwa 0,4-fache des Durchmessers des Zugstabes.

Das Auge des Augenstabes 10, der ein Flachstab ist, weist die gleichen radialen Abmessungen d1, d2, d3 und d4 auf wie die Augenlaschen des Stabankers.

Diese Stabankeranordnung gemäß der Erfindung ist als Gesamtanordnung zu betrachten und sollte nur mit den angegebenen Abmessungsverhältnissen angewandt und eingesetzt werden, da diese Abmessungen, was durch Berechnungen und Versuche voll bestätigt worden ist, ein Optimum an Formgebung, Materialausnutzung,einfache Montage und einfache Demontage darstellt. Abweichungen sollten daher in keinem Fall vorgenommen werden.

Diese neue Stabankeranordnung läßt sich also mit wenigen Handgriffen ein- und ausbauen und die erforderliche Mindesteindrehlänge leicht und wirkungsvoll dadurch überwachen, daß keine Gewindegänge zu sehen sind.

Vorzugsweise wird das Außengewinde 9 auf dem Zugstab aufgerollt, was erheblich zur Stabilität des Gewindes und zur Festigkeit der gesamten Stabankeronordnung beiträgt. Die durch die Erfindung zu lösende Aufgabe ist damit eindeutig geläst.

## Patentansprüche

1. Stabankeranordnung für auf Zug beanspruchte Stäbe, welche als einem Stabanker (1) mit einem Ankerkörper (2) mit einer ein Innengewinde (5) aufweisenden bohrung und aus zwei zueinander parallelen, sich an den Ankerkörper (2) anschließenden Augenlaschen (3) zur Aufnahme eines Augenstabes (10) sowie einem mit Außengewinde (9) versehenen, in das Innengewinde (5) der Bohrung einschraubbaren Zugstab besteht, dadurch gekennzeichnet, daß die Bohrung des Ankerkörpers (2) aus einem ersten glatten Toleranzausgleichsabschnitt (6), dem daran anschließenden Innengewinde (5) und einem an das Innengewinde anschließenden zweiten glatten Tolerarzausgleichsabschnitt (7) besteht, wobei beide Toleranzausgleichsabschnitte (6, 7) einen geringfügig größeren Durchmesser aufweisen als das Außengewinde (9) des Zugstabes, und wobei die Länge des Außengewindes (9) des Zugstabes (8) im wesentlichen der Mindesteindrehlänge des Zugstabes (8) zuzüglich der Länge eines Toleranzausgleichsabschnittes (6 bzw. 7) entspricht.

2. Stabankeranordnung nach Anspruch 1, dadurch gekennzeichnet, daß die Länge des Innengewindes (5) größer ist als die Mindesteindrehlänge des Zugstabes.

3. Stabankeranordnung nach Anspruch 1, dadurch gekennzeichnet, daß der Durchmesser der Öffnung der parallelen Augenlaschen etwa 0,85 mal so groß ist wie der Durchmesser (D) des Zugstabes.

4. Stabankeranordnung nach Anspruch 1 und 3, dadurch gekennzeichnet, daß die Materialstärke (d1) der Augenlaschen in Richtung der Zugbeanspruchung etwa dem Durchmesser (D) des Zugstabes, und in der dazu senkrechten, durch den Mittelpunkt der Öffnungen gehenden Richtung die Breite (d2) dem etwa 0,74-fachen des Durchmessers des Zugstabes entspricht, und daß die Breite (d3) am Übergang von den Augenlaschen (3) in den Ankerkörper, gemessen unter einem Winkel von 45° gegen die Längsachse, und (d4) senkrecht zur Längsachse jeweils dem etwa 1,04-fachen des Durchmessers (D) des Zugstabes entspricht.

5. Stabankeranordnung nach Anspruch 1, 3 und 4, dadurch gekennzeichnet, daß die Materialstärke (d5) dar Augenlaschen in der Umgebung der für einen Augenbolzen (4) vorgesehenen Öffnungen jeweils etwa dem 0,5-fachen des Durchmessers des Zugstabes entspricht und sich in Längsrichtung nach beiden Seiten auf das jeweils etwa 0,4-fache des Durchmessers des Zugstabes verringert (d6) .

6. Stabankeranordnung nach Anspruch 1, und 3 bis 5, gekennzeichnet durch einen mittels eines Augenbolzens (4) gehaltenen Augenstab (10), dessen Auge die gleichen radialen Abmessungen (d1, d2, d3, d4) aufweist wie die Augenlaschen des Stabankers.

7. Stabankeranordnung nach Anspruch 1, dadurch gekennzeichnet, daß das Außengewinde des Zugstabes aufgerollt ist.

8. Stabankeranordnung nach Anspruch 1, dadurch gekennzeichnet, daß der Zugstab auf mindestens einer Seite mindestens eine flache Prägung (12), vorzugsweise zwei einander gegenüberliegende Prägungen aufweist.

## Claims

1. Bar anchor arrangement for bars subjected to tensile stress, which consists of a bar anchor (1) with an anchor body (2) with a bore possessing an internal thread (5) and of two parallel eye plates (3) adjoining the anchor body (2) to accommodate an eye bar (10) as well as of a tension bar provided with external thread (9) which can be screwed into the internal thread (5) of the bore, characterized in that the bore of the anchor body (2) consists of a first smooth tolerance compensating section (6), the adjoining internal thread (5) and a second smooth tolerance compensating section (7) adjoining the internal thread, whereby both tolerance compensating sections (6, 7) possess a slightly larger diameter than the external thread (9) of the tension bar, and whereby the length of the external thread (9) of the tension bar (8) essentially corresponds to the minimum screw-in length of the tension bar (8) plus the length of a tolerance compensating section (6 and 7).

2. Bar anchor arrangement in accordance with Claim 1, characterized in that the length of the internal thread (5) is greater than the minimum screw-in length of the tension bar.

3. Bar anchor arrangement in accordance with Claim 1, characterized in that the diameter of the opening of the parallel eye plates is approximately 0.85 times as large as the diameter (D) of the tension bar.

4. Bar anchor arrangement in accordance with Claims 1 and 3, characterized in that the material thickness (d1) of the eye plates in the direction of tensile stress corresponds to approximately the diameter (D) of the tension bar, in that the width (d2) in the direction passing through the center point of the openings corresponds to approximately 0.74 times the diameter of the tension bar and in that the width (d3) at the transition of the eye plates (3) to the anchor body corresponds to approximately 1.04 times the diameter (D) of the tension bar respectively measured at angle of 45° with respect to the longitudinal axis and (d4) perpendicularly to the longitudinal axis.

5. Bar anchor arrangement in accordance with Claims 1, 3 and 4, characterized in that the material thickness (d5) of the eye plates in the area of the openings provided for an eye bolt (4) corresponds approximately to 0.5 times the diameter of the tension bar and is reduced in longitudinal direction on both sides to approximately 0.4 times the diameter of the tension bar in each case (d6).

6. Bar anchor arrangement in accordance with Claims 1 and 3 to 5, characterized by an eye bar (10) held by means of an eye bolt (4), whereby the eye of the eye bar possesses the same radial dimensions (d1, d2, d3, d4) as the eye plates of the bar anchor.

7. Bar anchor arrangement in accordance with Claim 1, characterized in that the external thread of the tension bar is rolled.

8. Bar anchor arrangement in accordance with Claim 1, characterized in that the tension bar possesses a flat embossed section (12) on at least one side and preferably two opposing embossed sections.

## Revendications

1. Agencement d'ancrage de barres sollicitées en traction, comprenant un organe de fixation (1) des barres, formé d'un corps d'ancrage (2) pourvu d'un alésage avec un filetage interne (5), et deux colliers de fixation à oeil (3) parallèles reliés au corps d'ancrage (2) qui reçoivent une barre à oeil (10), de même qu'un tirant pourvu d'un filetage externe (9) se vissant dans le filetage interne (5) de l'alésage, caractérisé en ce que l'alésage du corps d'ancrage (2) est composé d'une première section lisse (6) de compensation de tolérance, du filetage interne (5) qui y est relié et d'une seconde section lisse (7) de compensation de tolérance reliée au filetage interne, les deux sections (6, 7) de compensation de tolérance ayant un diamètre légèrement supérieur à celui du filetage externe (9) du tirant et la longueur du filetage externe (9) du tirant (8) correspondant sensiblement à la longueur de vissage minimale du tirant (8) plus la longueur d'une section de compensation de tolérance (6 ou 7).

2. Agencement d'ancrage de barres selon la revendication 1, caractérisé en ce que la longueur du filetage interne (5) est supérieure à la longueur de vissage minimale du tirant.

3. Agencement d'ancrage de barres selon la revendication 1, caractérisé en ce que le diamètre de l'ouverture des colliers de fixation à oeil (3) parallèles est d'environ 0,85 fois le diamètre (D) du tirant.

4. Agencement d'ancrage de barres selon la revendication 1 et 3, caractérisé en ce que l'épaisseur du matériau (d1) des colliers de fixation à oeil dans la direction de la traction correspond approximativement au diamètre (D) du tirant, en ce que, dans la direction verticale traversant le centre des ouvertures, la largeur (d2) correspond approximativement à 0,74 fois le diamètre du tirant et en ce que la largeur (d3) à la transition entre les colliers de fixation à oeil (3) et le corps d'ancrage, mesurée selon un angle de 45° par rapport à l'axe longitudinal et (d4) verticalement par rapport à l'axe longitudinal, correspond respectivement à approximativement 1,04 fois le diamètre (D) du tirant.

5. Agencement d'ancrage de barres selon la revendication 1, 3 et 4, caractérisé en ce que l'épaisseur du matériau (d5) des colliers de fixation à oeil au niveau des ouvertures prévues pour un goujon à oeil (4) correspond respectivement à approximativement 0,5 fois le diamètre du tirant et diminue dans le sens de la longueur vers les deux côtés à approximativement 0,4 fois le diamètre du tirant (d6).

6. Agencement d'ancrage de barres selon la revendication 1, et 3 à 5, caractérisé par une barre à oeil (10) maintenue par un goujon à oeil (4), barre dont l'oeil présente les mêmes dimensions en sens radial (d1, d2, d3, d4) que les colliers de fixation à oeil de l'organe de fixation.

7. Agencement d'ancrage de barres selon la revendication 1, caractérisé en ce que le filetage externe du tirant est laminé.

8. Agencement d'ancrage de barres selon la revendication 1, caractérisé en ce que le tirant présente sur au moins un côté au moins une empreinte plate (12) et de manière préférentielle deux empreintes plates opposées.
